# EUROPÄISCHE PATENTANMELDUNG

(11) **EP 1 770 030 A2**
(43) Veröffentlichungstag der Anmeldung: **04.04.2007**
(21) Anmeldenummer: 06120804.7
(22) Anmeldetag: 18.09.2006
(51) Int. Cl.: B65G 47/84, B65G 47/91

(54) **Vorrichtung zur Handhabung von Blisterstreifen**

(30) Priorität: 29.09.2005 DE 102005046604
(71) Anmelder: ROBERT BOSCH GMBH, 70442 Stuttgart (DE)
(72) Erfinder: Glasbrenner, Michael, 74523, Schwäbisch-Hall-Sulzdorf (DE); Van de Loecht, Heinrich, 76461, Muggensturm (DE)

(57) **Zusammenfassung**

Es wird eine Vorrichtung zur Handhabung von Blisterstreifen (4, 5) mit einer Saugrotorvorrichtung (10) vorgeschlagen, bei der an einem Grundkörper (13) rotationssymmetrisch um eine erste Drehachse (I) mehrere Greifarme (3) angeordnet sind. Dabei ist jeder Greifarm (3) an einem um die erste Drehachse (I) drehenden Planetenkörper (2) gelagert, welcher um eine achsparallel zur ersten Drehachse (I) verlaufende zweite Drehachse (II) drehbar gelagert ist, wobei der Greifarm (3) um die zweite Drehachse (II) drehbar ist und achsparallel zu der zweiten Drehachse (II) eine dritte Drehachse (II) für wenigstens einen an dem Greifarm (3) drehbar gelagerten und quer zur dritten Drehachse (III) wirkenden Sauger (40, 50) bildet (Figur 9).

## Beschreibung

### Stand der Technik

Die Erfindung betrifft eine Vorrichtung zur Handhabung von Blisterstreifen mit einer Saugrotorvorrichtung nach der im Oberbegriff des Patentanspruches 1 näher definierten Art.

Eine derartige Vorrichtung ist beispielsweise aus der DE 198 41 508 C1 bekannt. Bei dieser bekannten Vorrichtung zur Übergabe von Packstücken, insbesondere Blisterstreifen, ist eine Fördereinrichtung mit einem Rotor vorgesehen, welcher mindestens drei mehrbahnig arbeitende Arme aufweist, die gleichmäßig verteilt über den Umfang des Rotors angeordnet sind. Beim Umlauf des Rotors kommt jeder Arm in der Folge nacheinander mit einer Abnahmestation, einer Zwischenspeicherstation und einer Stapelbildungsstation für die Packstücke in Wirkkontakt.

Weiterhin ist eine Vorrichtung zur Handhabung von Blisterstreifen der eingangs genannten Art aus der DE 196 48 447 A1 bekannt, welche die Anordnung mehrerer Saugrotorvorrichtungen zur Handhabung von Blisterstreifen, welche befüllt einer Blisterstreifenstanze entnommen und einer Fördereinrichtung zum Transport an eine Kartoniermaschine zugeführt werden, offenbart.

Die zum Transport der Blisterstreifen zwischen zwei Übergabestationen vorgesehenen Saugrotoren sind dabei exzentrisch umlaufend, wobei durch die exzentrische Lagerung der Saugrotoren Unwuchtkräfte entstehen, die zu erhöhten Belastungen und Geräuschemissionen der Maschinenelemente führen.

Des Weiteren ist bei den bekannten Vorrichtungen zur Handhabung von Blisterstreifen ein erhöhter Saugerverschleiß durch eine Walkbewegung der Sauger bei der Blisterstreifenentnahme und bei der Blisterstreifenablage zu beobachten.

Wenn der Saugrotor wie bei bekannten Vorrichtungen zur Erlangung einer Zwischenposition entgegen der Blisterförderrichtung der Transportkette dreht, ist zudem eine Sonnenradverdrehung zur Geschwindigkeitssynchronisierung nicht möglich.

Allgemein haftet den bekannten Saugrotoren der Nachteil an, dass die Blisterstreifen zwischen den Übergabestationen hohe Beschleunigungen erfahren, wodurch eine Leistungssteigerung aufgrund ansonsten sinkender Prozesssicherheit begrenzt ist.

### Vorteile der Erfindung

Die Erfindung sieht bei einer Vorrichtung zur Handhabung von Blisterstreifen mit einer Saugrotorvorrichtung, bei der an einem Grundkörper rotationssymmetrisch um eine erste Drehachse mehrere Greifarme angeordnet sind, vor, dass jeder Greifarm an einem um die erste Drehachse drehenden Planetenkörper gelagert ist, welcher um eine achsparallel zur ersten Drehachse verlaufende zweite Drehachse drehbar gelagert ist, wobei der Greifarm um die zweite Drehachse drehbar ist und achsparallel zu der zweiten Drehachse eine dritte Drehachse für wenigstens einen an dem Greifarm drehbar gelagerten und quer zur dritten Drehachse wirkenden Sauger bildet.

Die erfindungsgemäße Lösung hat den Vorteil, dass durch die rotationssymmetrische Anordnung der Saugrotorvorrichtung Unwuchten bei einem Umlauf der Saugrotorvorrichtung minimiert und dadurch hiermit verbundene Belastungen und Geräuschemissionen der Saugrotorvorrichtung vermieden werden.

Des weiteren ist mit der erfindungsgemäßen Ausgestaltung der Saugrotorvorrichtung eine signifikante Minderung der Beschleunigung der Blisterstreifen zwischen ihren Übergabestationen um circa 50% gegenüber bekannten Vorrichtungen erzielbar, womit ein produktschonender Transport ermöglicht wird sowie zusätzlich Leistungsreserven vorgehalten werden.

Bei der erfindungsgemäßen Vorrichtung ist zudem die Kippbewegung der Sauger zum Zeitpunkt der Blisterstreifenaufnahme oder Blisterstreifenabgabe gegenüber bekannten Vorrichtungen reduziert, wodurch vorteilhafterweise der Saugerverschleiß reduziert und die Prozesssicherheit erhöht wird.

In vorteilhafter Ausgestaltung der Erfindung ist die erste Drehachse durch einen mit einer Antriebseinheit verbundenen Planetenträger gebildet, welche jeweils über einen Verbindungsarm mit einem Planentenkörper verbunden ist.

Wenn der Grundkörper der Saugrotorvorrichtung ein feststehendes Hohlrad für die Planetenkörper bildet, kann durch eine Sonnenradverdrehung in vorteilhafter Weise eine zusätzliche Begleitbewegung auf kontinuierlich bewegte Transportmittel erzeugt werden. Zusätzlich zu dem Planetenträger wird somit ein Sonnenrad kongruent eingebracht, das separat angetrieben wird. Dieses Sonnenrad überträgt dann die definiert erzeugte Drehbewegung der zwei Abtriebsräder an den Greifarm.

Durch die sich bei der erfindungsgemäßen Ausgestaltung der Saugrotorvorrichtung ergebende Positionierung der Wirkstelle zwischen dem Sauger und einem Blisterstreifen im Nahbereich des Wälzkreisdurchmessers des gestellfesten Hohlrades wird weiterhin der Vorteil erzielt, dass eine geometrische Verstärkung von Positionierabweichungen weitgehend vermieden wird.

Insgesamt zeichnet sich die erfindungsgemäße Ausgestaltung der Saugrotorvorrichtung durch einen einfachen Aufbau vorwiegend aus Gleichteilen aus.

Weiteres Potenzial für eine weitergehende Beschleunigungsabsenkung besteht durch eine Modulation nichtlinearer Winkelfunktionsverläufe des Antriebs der Saugrotorvorrichtung.

Weitere Vorteile und vorteilhafte Ausgestaltungen des einer Vorrichtung zur Handhabung von Blisterstreifen nach der Erfindung sind der Beschreibung, der Zeichnung und den Patentansprüchen entnehmbar.

### Zeichnung

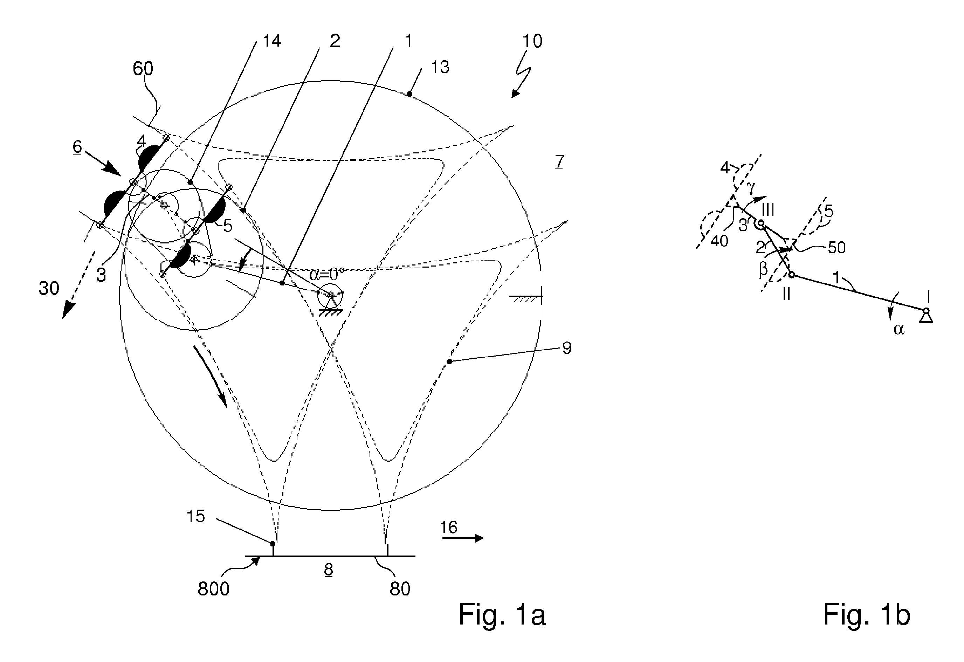

Mehrere Ausführungsbeispiele einer erfindungsgemäß ausgestalteten Vorrichtung zur Handhabung von Blisterstreifen sind in der Zeichnung schematisch vereinfacht dargestellt und werden in der nachfolgenden Beschreibung näher erläutert. Es zeigen Figur 1a ein Funktionsschema einer Saugrotorvorrichtung, bei der übersichtlichkeitshalber von drei rotationssymmetrisch angeordneten Greifarmen nur ein Greifarm dargestellt ist, in einer ersten von drei Umlaufpositionen;
Figur 1b ein kinematisches Ersatzsystem für den Greifarm der Figur 1a;
Figur 2a ein Funktionsschema mit der Saugrotorvorrichtung der Figur 1a in einer zweiten Umlaufposition;
Figur 2b ein kinematisches Ersatzsystem für den Greifarm der Figur 2a;
Figur 3a ein Funktionsschema mit der Saugrotorvorrichtung der Figur 1a in einer dritten Umlaufposition;
Figur 3b ein kinematisches Ersatzsystem für den Greifarm der Figur 3a;
Figur 4a ein Funktionsschema mit der Saugrotorvorrichtung der Figur 1a in einer vierten Umlaufposition;
Figur 4b ein kinematisches Ersatzsystem für den Greifarm der Figur 4a;
Figur 5a ein Funktionsschema einer zweiten Ausführung einer Saugrotorvorrichtung, bei der übersichtlichkeitshalber von drei rotationssymmetrisch angeordneten Greifarmen nur ein Greifarm dargestellt ist;
Figur 5b ein kinematisches Ersatzsystem für den Greifarm der Figur 5a;
Figur 6a ein Funktionsschema einer dritten Ausführung einer Saugrotorvorrichtung, bei der übersichtlichkeitshalber von drei rotationssymmetrisch angeordneten Greifarmen nur ein Greifarm dargestellt ist;
Figur 6b ein kinematisches Ersatzsystem für den Greifarm der Figur 6a;
Figur 7a ein Funktionsschema einer vierten Ausführung einer Saugrotorvorrichtung;
Figur 7b ein kinematisches Ersatzsystem für einen Greifarm der Saugrotorvorrichtung der Figur 7a;
Figur 8a ein Funktionsschema einer fünften Ausführung einer Saugrotorvorrichtung mit vier Greifarmen;
Figur 8b ein kinematisches Ersatzsystem für einen Greifarm der Saugrotorvorrichtung der Figur 8a; und
Figur 9 eine vereinfachte perspektivische Ansicht einer konstruktiven Ausführung der Saugrotorvorrichtung gemäß den Figur 1a bis 4b im Längsschnitt.

### Beschreibung der Ausführungsbeispiele

Die Figuren 1a bis 8b der Zeichnung zeigen jeweils eine Saugrotorvorrichtung 10 einer erfindungsgemäßen Vorrichtung zur Handhabung von Blisterstreifen 4, 5 in unterschiedlichen Umlaufpositionen, wobei für jede Umlaufposition ein Funktionsschema und ein kinematisches Ersatzsystem wiedergegeben sind, bei denen aus Gründen der Übersichtlichkeit von mehreren Greifarmen der Saugrotorvorrichtung 10 jeweils nur ein Greifarm 3 vereinfacht dargestellt ist.

Wie den Figuren zu entnehmen ist, ist die Saugrotorvorrichtung 10 in der Art eines viergliedrigen Getriebes aufgebaut, das auf Basis des kinematischen Ersatzsystems betrachtet einen gestellartigen Grundkörper 13 und drei Gelenkglieder 1, 2, 3 aufweist, welche durch einen Planetenträger 1, kreisrunde Planetenkörper 2 und rotationssymmetrisch um eine erste Drehachse I angeordnete Greifarme 3 gebildet werden. Bei den Ausführungen der Figuren 1a bis 7b sind jeweils drei Greifarme 3 vorgesehen.

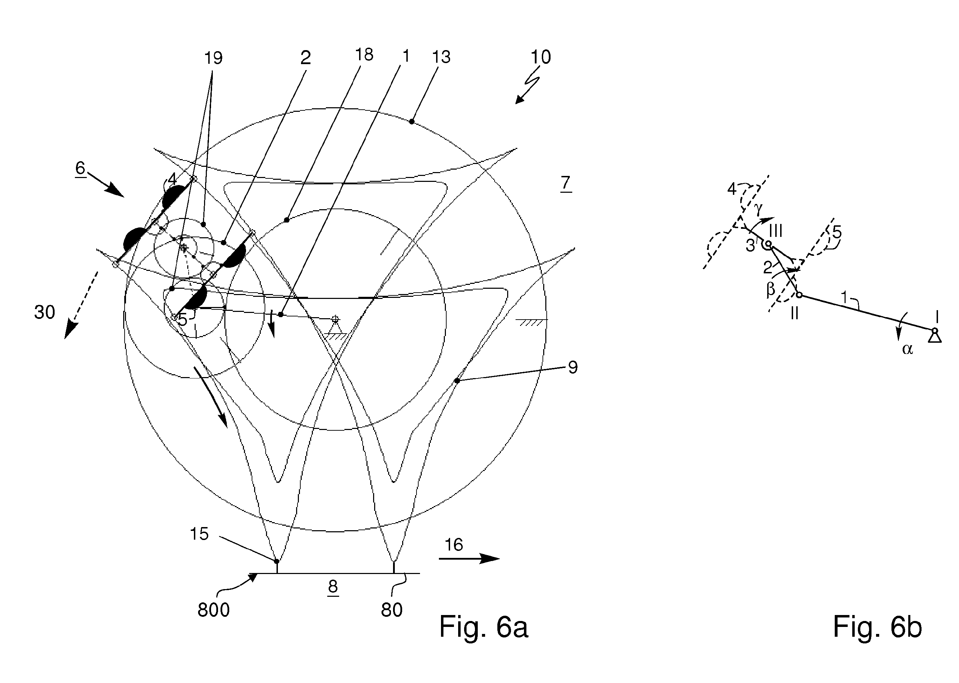

Die Zahl der Freiheitsgrade, die notwendig sind, um die jeweilige Lage der Sauger und somit der Blister eindeutig zu beschreiben, beträgt 1 (α).Die Drehwinkel β, γ sind durch die mechanische Zwangsläufigkeit gebunden. Im Gegensatz dazu sind in der Ausführungsvariante gemäß den Figuren 6a, 6b zwei Freiheitsgrade vorhanden (α, γ). β ergibt sich aus der mechanischen Zwangsläufigkeit.

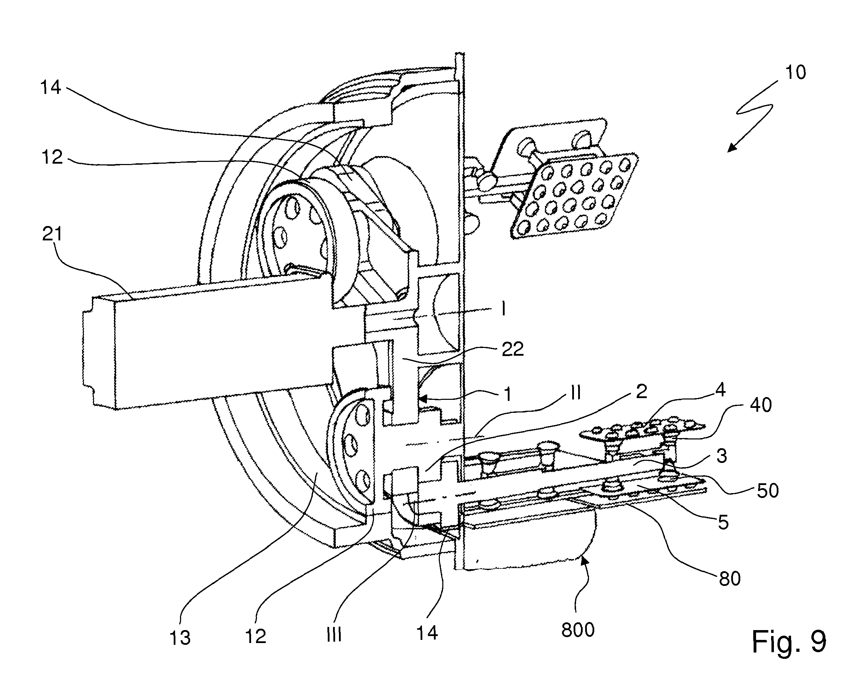

Wie auch der in Figur 9 gezeigten konstruktiven Ausgestaltung zu entnehmen ist, ist jeder Greifarm 3 an einem um die erste Drehachse I drehenden Planetenkörper 2 gelagert, welcher um eine achsparallel zur ersten Drehachse I verlaufende zweite Drehachse II drehbar gelagert ist. Eine die zweite Drehachse II definierende Lagerstelle läuft dabei auf einer Kreisbahn um eine die erste Drehachse I definierende Lagerstelle an einem gestellfesten Grundkörper 13 um. Die Planetenkörper 2 sind hierzu jeweils mit einem Verbindungsarm 22 eines Planetenträgers 1 verbunden, welcher um die gestellfeste erste Drehachse I drehbar ist und mit einer Antriebseinheit 21 verbunden ist. Der Grundkörper 13 bildet für die Planetenkörper 2 ein feststehendes Hohlrad.

Die Greifarme 3 sind jeweils um die zweite Drehachse II drehbar gelagert und bilden selbst eine dritte, achsparallel zu der zweiten Drehachse II ausgerichtete Drehachse III für vorliegend zwei an dem Greifarm 3 drehbar gelagerte und quer zur dritten Drehachse III wirkende Sauger 40, 50.

Die Sauger 40, 50 sind rotationssymmetrisch beziehungsweise spiegelsymmetrisch an dem die dritte Drehachse III bildenden Greifarm 3 angeordnet und arbeiten dabei mehrbahnig, das heißt vorliegend zweibahnig, womit zweibahnig zugeführte Blisterstreifen von dem jeweiligen Greifarm 3 aufgenommen und von diesem abgegeben werden können.

Es versteht sich, dass in weiteren Ausführungen auch eine nur einbahnige oder mit mehr als zwei Bahnen arbeitende Mehrbahnigkeit für die Greifarme 3 vorgesehen sein kann.

Es versteht sich ferner, dass bei Benutzung von Saugern als Greifelemente der Greifarme eine Unterdruckquelle und entsprechende Steuerventile und Leitungen vorgesehen sein müssen, um Blisterstreifen gezielt ansaugen, fördern und ablegen zu können. Hierfür vorteilhafte Steuer- und Überwachungseinrichtungen sind ebenfalls aus dem Stand der Technik hinreichend bekannt.

Der Bewegungsablauf des Planetenträgers 1, der Planetenkörper 2 und der hieran angelenkten Greifarme 3 ergibt bei einem vollen Rotorumlauf der Saugrotorvorrichtung 10 mit α=360° drei ausgeprägte Kurvenspitzen beziehungsweise Umkehrspitzen 6, 7, 8, die derart gestaltet sind, dass Blisterstreifen 4, 5 in guter Näherung senkrecht entnommen oder abgegeben werden.

Die Greifarme 3 sind rotatorisch um die dritte Drehachse III durch einen an dem jeweiligen Greifarm 3 und dem Planetenkörper 2 angreifenden, bei den Figuren 1a bis 4b als Riementrieb 14 ausgebildeten Antrieb angetrieben.

Bezug nehmend auf die Figuren 1a und 1b ist der beispielhaft gezeigte Greifarm 3 mit den Saugern 40, 50, der während des Umlaufs der Saugrotorvorrichtung 10 eine Zykloidenbahn 9 mit den drei Kurvenspitzen 6, 7, 8 im Gegenuhrzeigersinn durchläuft, in einer ersten Übergabestation 6 an der ersten Kurvenspitze gezeigt, wobei diese erste Übergabestation 6 bei der gezeigten Ausführung an einem Blisterstreifenschacht einer Blisterstreifenstanzvorrichtung 60, an der Blisterstreifen für Tabletten oder Süßwaren aus einem Band einer Tiefziehverpackungsanlage ausgestanzt werden, angeordnet ist.

In anderen Ausführungen kann die erste Übergabestation jedoch auch in einfacher Weise aus einem Förderband oder einem anders gestalteten Förderer bestehen, mit welchem Blisterstreifen dem Greifarm 3 zugeführt werden.

Wie in den Figuren 1a und 1b gezeigt ist, entnimmt an der ersten Übergabestation 6 ein erster Sauger 40 der Sauger 40, 50 des Greifarmes 3 einen ersten Blisterstreifen 4 aus dem Schacht der Blisterstreifenstanzvorrichtung 60, während an dem zweiten, der ersten Drehachse I zugewandten Sauger 50 ein zweiter Blisterstreifen 5 aus einem vorangegangenen Umlauf anhaftet.

Nach Aufnahme des ersten Blisterstreifens 4 wird dieser mit Rotation der Saugrotorvorrichtung 10 um α=120° im Gegenuhrzeigersinn auf der modifizierten Zykloidenbahn 9 befördert. Dabei ist eine Ausscheidung von nur teilweise befüllten Blisterstreifen oder schlecht befüllten Blisterstreifen, welche zum Beispiel zerbrochene Tabletten enthalten, durch einfaches Abkämmen in Richtung eines Ausscheideortes 30 möglich.

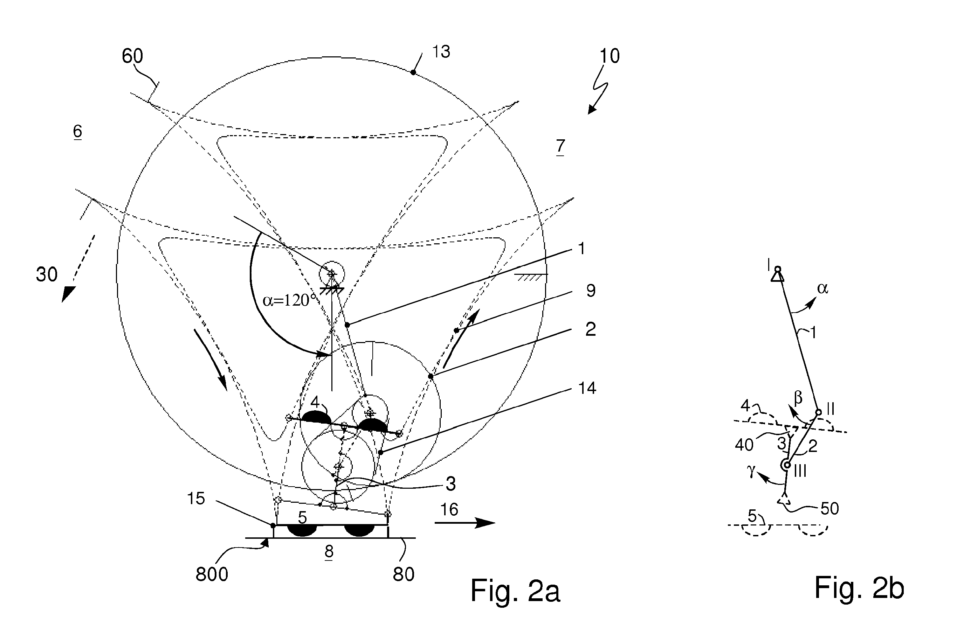

In der in den Figuren 2a und 2b gezeigten Umlaufposition der Saugrotorvorrichtung 10 bei α=120° kontaktiert der Greifarm 3 eine zweite Übergabestation 8 an der zweiten Kurvenspitze, wobei die zweite Übergabestation 8 vorliegend an einem Transportband 80 einer Transportvorrichtung 800, welche zu einer Kartoniervorrichtung 16 führt, angeordnet ist. An dieser zweiten Übergabestation 8 wird der zweite Blisterstreifen 5, der sich zum Zeitpunkt der Aufnahme des ersten Blisterstreifens 4 auf der dem Drehzentrum zugewandten Seite befunden hat, zwischen Mitnehmern 15 des Transportbandes 80 abgelegt und abtransportiert. Der aus der Blisterstreifenstanze 60 entnommene erste Blisterstreifen 4 befindet sich dabei auf der gegenüberliegenden, der ersten Drehachse I zugewandten Seite des Greifarms 3.

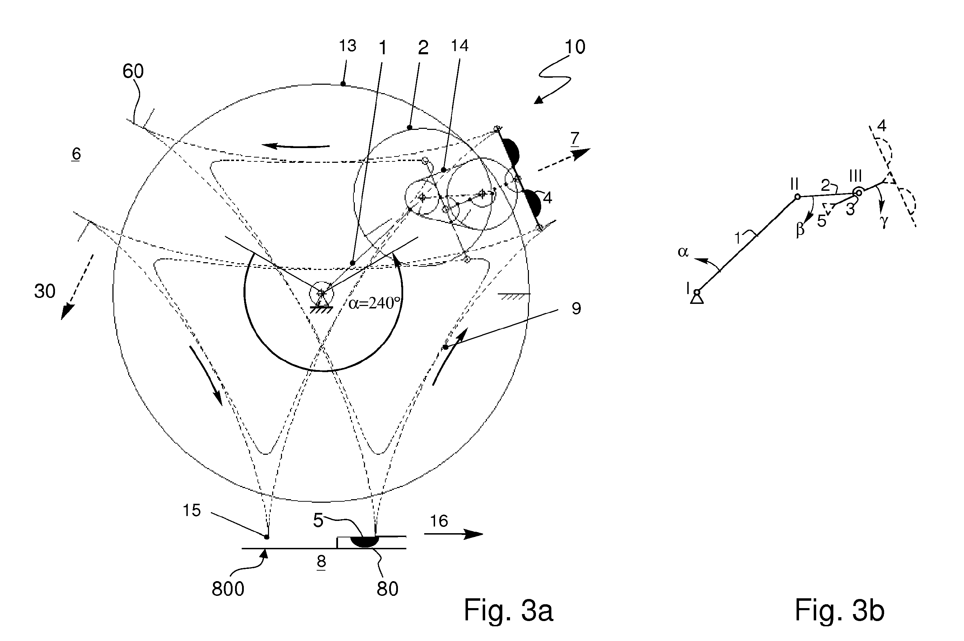

Bei weiterem Umlauf der Saugrotorvorrichtung 10 in eine Winkelposition α=240°, welche in den Figuren 3a und 3b dargestellt ist, erreicht der erste Blisterstreifen 4 an der dritten Kurvenspitze 7 eine Zwischenposition, an dem ein Ersatzblisterstreifen aufgenommen werden kann, sofern zuvor ein fehlerhafter Blisterstreifen abgegeben wurde, oder an der auch ein fehlerhafter Blisterstreifen definiert aus dem Handhabungsprozess ausgeschleust werden kann.

Die Zwischenposition 7 eignet sich bei Bedarf besonders als Nachlegeschacht, da der Schwerkrafteinfluss auf die sich im Schacht befindenden Blisterstreifen durch die flachliegende Blisterstreifenbox stark minimiert wird und deshalb ein unbeabsichtigtes Durchbrechen des Blisterstreifenstapels nahezu ausgeschlossen werden kann.

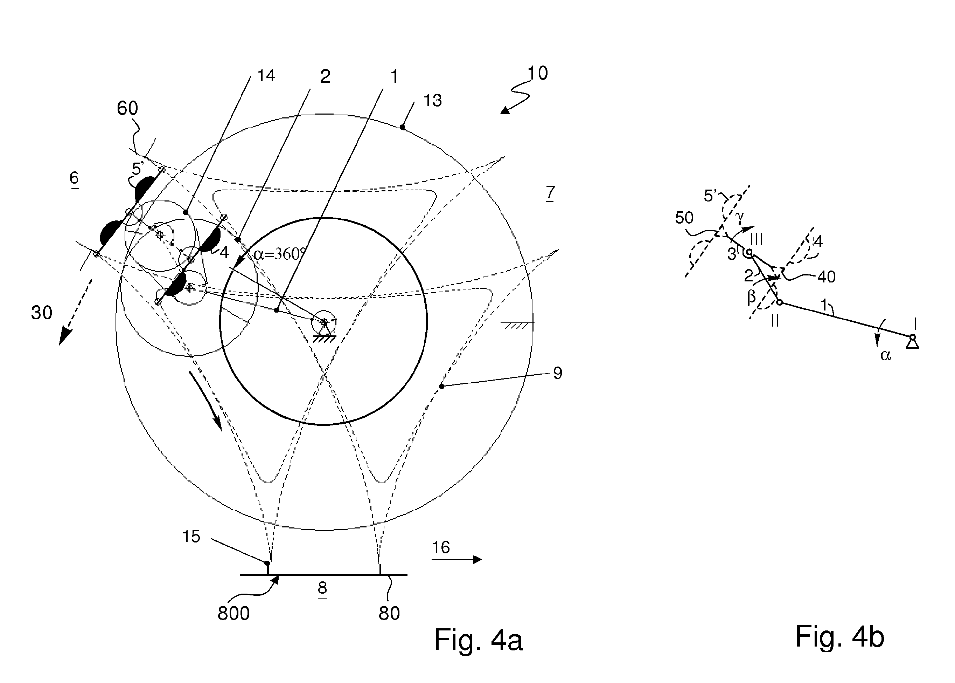

Der in der Zwischenposition 7 an dem ersten, dann der ersten Drehachse I abgewandten Sauger 40 anhaftende erste Blisterstreifen 4 wird bei weiterem Umlauf der Saugrotorvorrichtung 10 in eine in den Figuren 4a und 4b dargestellte Winkelposition bei α=360° und somit Wiedererreichen der ersten Übergabestation 6 wiederum verschwenkt, so dass der erste Blisterstreifen 4 an dem ersten Sauger 40 der ersten Drehachse I zugewandt ist. Der erste Blisterstreifen 4 ist somit an der ersten Wiedergabestation 6 um 180° gegenüber seiner Ausgangsposition gedreht, während der zweite Sauger 50 einen dritten Blisterstreifen 5' aus der ersten Wiedergabestation 6 entnimmt.

Durch Weiterdrehung der Saugrotorvorrichtung 10 und des Greifarmes 3 gelangt der erste Blisterstreifen 4 in einer Winkelposition α=480° und somit bei Wiedererreichen der zweiten Übergabestation 8 in seine Ablageposition, in der er kontrolliert auf das Transportband 80 der Transportvorrichtung 800 abgelegt wird. Der dritte Blisterstreifen 5' haftet dabei an dem zweiten Sauger 50 auf der der ersten Drehachse I zugewandten Seite des Greifarmes 3 an.

Durch die erzeugte Zykloidenbahnkurve 9, die den Blisterstreifen 4 bzw. 5 nahe an dem Drehzentrum, das heißt der ersten Drehachse I, vorbeiführt und den jeweiligen Blisterstreifen erst im zweiten Umlauf in seine Ablageposition bringt, werden die absoluten Blisterstreifenbeschleunigungen im Vergleich zu bekannten Vorrichtungen erheblich reduziert. Zur Minimierung der Sauger- bzw. Blisterstreifenkippung, insbesondere im Randbereich der Blisterstreifen, sind die Zykloidenspitzen 6, 7, 8 durch eine hohe Radialbewegungskomponente der Zykloidenbahnkurve 9 extrem spitz ausgebildet.

Die Bewegungserzeugung ist bei den Ausführungen gemäß den Figuren 1a bis 4b und 9 rein mechanisch mit einem Riemenantrieb 14 realisiert.

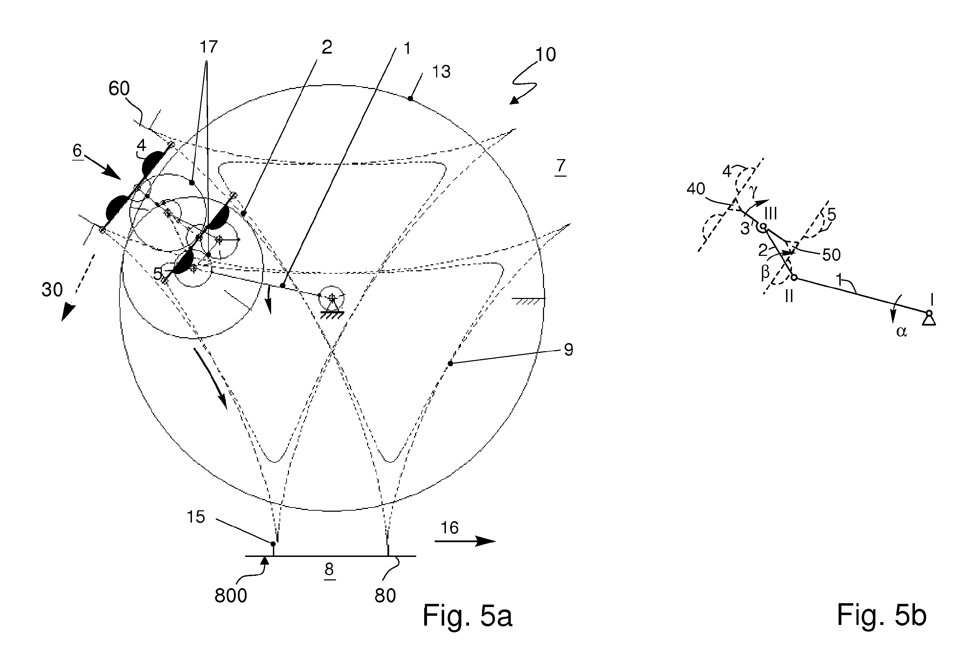

In den Figuren 5a und 5b ist eine Ausführungsvariante dargestellt, bei der als Antriebseinheit eine doppelte Getriebestufe 17 vorgesehen wird, mit der eine Bewegungsbahn von Blisterstreifen gemäß der Ausführung gemäß den Figuren 1a bis 4b erzielt werden kann.

In den Figuren 6a und 6b ist eine weiter Ausgestaltungsmöglichkeit der Antriebseinheit für den Greifarm 3 gezeigt, bei der zusätzlich eine Sonnenradverdrehung realisiert werden kann, durch welche der Blisterstreifen 4 bzw. 5 bei geänderter Bahnkurve 9 auf ein kontinuierlich laufendes Transportband 80 aufsynchronisierbar ist. Hierfür wird die Drehbewegung des Greifarmes 3 über ein Sonnenrad 18 mit zwei nachgeschalteten Abtriebsrädern 19 erzeugt.

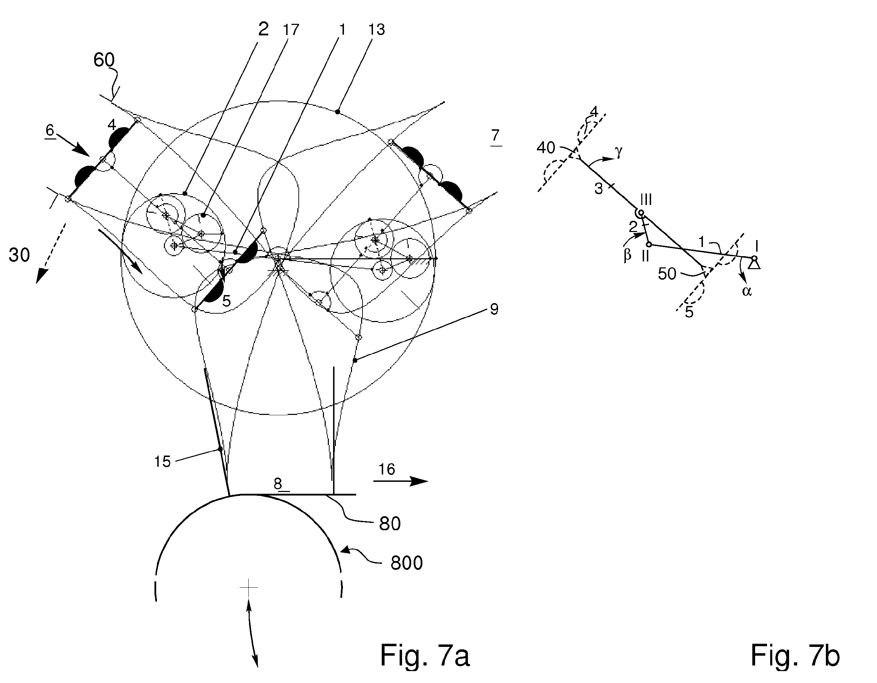

Wie die Figuren 7a und 7b zeigen, ist die Saugrotorvorrichtung 10 auch in anderen Ausführungsformen mit einer Änderung der wirksamen Gliedlängen und Drehgelenkabstände realisierbar, ohne dass sich das kinematische Grundprinzip ändert. So ist die in den Figuren 7a und 7b dargestellte Saugrotorvorrichtung 10 für eine direkte Blistersteifenabstapelung in eine absenkbare Produktkette 80 auch mit zwei Greifarmen 3 einsetzbar, die extrem lang ausgeführt sind und sich durch eine sehr hohe und schmale Zykloidenkurve 9 auszeichnen.

Damit vermindert sich die Kollisionsgefahr mit angrenzenden Bereichen, beispielsweise mit den Mitnehmern 15 des Transportbandes 80.

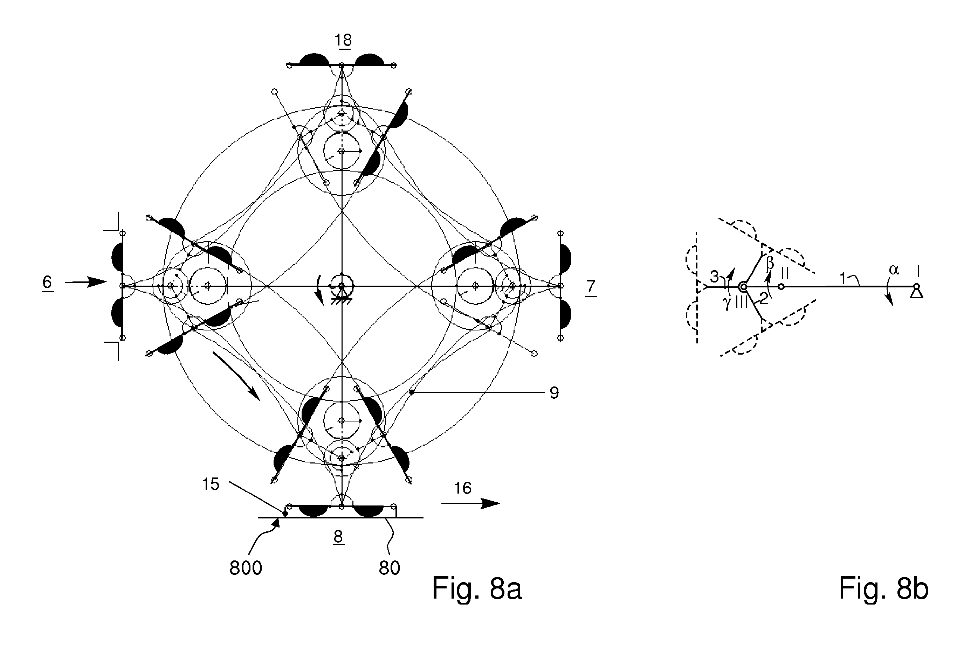

Die Figuren 8a und 8b zeigen eine Ausführung einer Saugrotorvorrichtung 10 mit vier Greifarmen 3, wobei sich durch die veränderte Anzahl der Greifarme eine veränderte Anzahl an Zykloidenspitzen an der Bahnkurve 9 mit einer zusätzlichen Umkehrstelle beziehungsweise Kurvenspitze 18 ergibt. In die zusätzlich entstandene Umkehrstelle 18 kann eine zusätzliche Rotorschnittstelle implementiert werden. Zudem wird bei einer derartigen Ausführung ein produktschonender Blisterstreifentransport durch eine weitere Absenkung der Beschleunigungsspitzen erzielt.

Unabhängig von der veränderten Anzahl der Greifarme bleiben die unterschiedlichen Möglichkeiten des Antriebs, wie zum Beispiel ein Riemenantrieb oder ein Rädergetriebe, erhalten.

Charakteristisch für alle gezeigten Ausführungen ist der zentrische Antrieb der rotationssymmetrisch zueinander angeordneten und hinsichtlich der Funktionsabläufe parallel bewegten Greifarme 3, womit ein nahezu unwuchtfreier Betrieb der Saugrotorvorrichtung 10 möglich ist.

Zwischen den Umkehrstellen in der Zykloidenbahnkurve 9 existieren die geringsten Blisterstreifenbeschleunigungen, wobei die Gliedarme 2, 3, die durch die Planetenträger 2 und Greifarme 3 gebildet werden und die bei einem gleichförmigen Antrieb auf Höhe der Kurvenspitzen 6, 7, 8 eine erhöhte Winkelbeschleunigung aufgrund von Richtungsumkehrungen in der Bahnkurve und Bewegungsüberlagerungen erfahren, bei einer Modifikation der Antriebsfrequenz zur Egalisierung von Beschleunigungsspitzen genutzt werden können.

## Patentansprüche

1. Vorrichtung zur Handhabung von Blisterstreifen (4, 5) mit einer Saugrotorvorrichtung (10), bei der an einem Grundkörper (13) rotationssymmetrisch um eine erste Drehachse (I) mehrere Greifarme (3) angeordnet sind, **dadurch gekennzeichnet, dass** jeder Greifarm (3) an einem um die erste Drehachse (I) drehenden Planetenkörper (2) gelagert ist, welcher um eine achsparallel zur ersten Drehachse (I) verlaufende zweite Drehachse (II) drehbar gelagert ist, wobei der Greifarm (3) um die zweite Drehachse (II) drehbar ist und achsparallel zu der zweiten Drehachse (II) eine dritte Drehachse (III) für wenigstens einen an dem Greifarm (3) drehbar gelagerten und quer zur dritten Drehachse (III) wirkenden Sauger (40, 50) bildet.

2. Vorrichtung nach Anspruch 1, **dadurch gekennzeichnet, dass** die zweite Drehachse (II) auf einer Kreisbahn um die erste Drehachse (I) umläuft.

3. Vorrichtung nach Anspruch 1 oder 2, **dadurch gekennzeichnet, dass** die erste Drehachse (I) durch einen mit einer Antriebseinheit (21) verbundenen Planetenträger (1) gebildet wird, an dem die Planetenkörper (2) gelagert sind.

4. Vorrichtung nach einem der Ansprüche 1 bis 3, **dadurch gekennzeichnet, dass** der Grundkörper (13) ein feststehendes Hohlrad für die Planetenkörper (2) bildet.

5. Vorrichtung nach Anspruch 3 oder 4, **dadurch gekennzeichnet, dass** der Greifarm (3) rotatorisch um die dritte Drehachse (III) durch einen an dem Greifarm (3) und dem Planetenträger (1) angreifenden Riementrieb (14) angetrieben ist.

6. Vorrichtung nach einem der Ansprüche 1 bis 5, **dadurch gekennzeichnet, dass** der Greifarm (3) zwei rotationssymmetrisch um die dritte Drehachse (III) angeordnete Sauger (40, 50) aufweist.

7. Vorrichtung, nach einem der Ansprüche 1 bis 6, **dadurch gekennzeichnet, dass** die Greifarme (3) hinsichtlich ihrer Funktionsabläufe parallel bewegt sind.

8. Vorrichtung nach einem der Ansprüche 1 bis 7, **dadurch gekennzeichnet, dass** die Saugrotorvorrichtung (10) mit drei Greifarmen (3) ausgebildet ist.

9. Vorrichtung nach einem der Ansprüche 1 bis 8, **dadurch gekennzeichnet, dass** der wenigstens eine Sauger (40, 50) während des Betriebs eine Zykloidenbahn (9) mit wenigstens drei Kurvenspitzen (6, 7, 8) im Gegenuhrzeigersinn durchläuft, wobei wenigstens zwei Kurvenspitzen (6, 8) Übergabestationen für Blisterstreifen (4, 5) darstellen.

10. Vorrichtung nach Anspruch 9, **dadurch gekennzeichnet, dass** bei zwei rotationssymmetrisch an dem Greifarm (3) angeordneten Saugern (40, 50) ein erster Sauger (40) einen ersten Blisterstreifen (4) aus einer ersten Übergabestation (6) an der ersten Kurvenspitze entnimmt, während an dem zweiten, der ersten Drehachse (I) zugewandten Sauger (50) ein zweiter Blisterstreifen (5) anhaftet; an einer zweiten Übergabestation (8) an der zweiten Kurvenspitze der zweite Blisterstreifen (5) abgegeben wird, während an dem ersten, dann der ersten Drehachse (I) zugewandten Sauger (40) der erste Blisterstreifen (4) anhaftet; an der dritten Kurvenspitze (7) eine Schlechtblisterausscheidung oder Ersatzblisterannahme durchführbar ist, wobei an dem ersten, dann der ersten Drehachse (I) abgewandten Sauger (40) der erste Blisterstreifen (4) anhaftet; bei Wiederereichen der ersten Übergabestation (6) der zweite Sauger (50) einen dritten Blisterstreifen (5') aus der ersten Übergabestation (6) entnimmt, während an dem ersten, dann der ersten Drehachse (I) zugewandten Sauger (40) der erste Blisterstreifen (4) anhaftet; und bei Wiederereichen der zweiten Übergabestation (8) der erste Blisterstreifen (4) abgegeben wird, während an dem zweiten, dann der ersten Drehachse (I) zugewandten Sauger (50) der dritte Blisterstreifen (5') anhaftet.

11. Vorrichtung nach Anspruch 10, **dadurch gekennzeichnet, dass** die erste Übergabestation (6) an einem Blisterstreifenschacht einer Blisterstreifenstanzvorrichtung (60) angeordnet ist.

12. Vorrichtung nach Anspruch 10 oder 11, **dadurch gekennzeichnet, dass** die zweite Übergabestation (8) an einem Transportband (80) einer Transportvorrichtung (800) angeordnet ist.
